# EUROPÄISCHE PATENTSCHRIFT

(11) **EP 0 848 112 B1**
(45) Veröffentlichungstag und Bekanntmachung des Hinweises auf die Patenterteilung: **03.04.2002**
(21) Anmeldenummer: 97120016.7
(22) Anmeldetag: 14.11.1997
(51) Int. Cl.: E02D 17/13, F16D 3/18

(54) **Schlitzwandfräse**
Milling device for trench walls
Fraise pour paroi moulée

(30) Priorität: 13.12.1996 DE 19652022
(43) Veröffentlichungstag der Anmeldung: 17.06.1998
(73) Patentinhaber: BAUER Maschinen GmbH, 86529 Schrobenhausen (DE)
(72) Erfinder: Arzberger, Maximilian, Dipl.-Ing. (FH), 86568 Igenhausen (DE); Seitle, Ignaz, 86668 Karlshuld (DE)
(74) Vertreter: Wunderlich, Rainer, Dipl.-Ing.

(56) Entgegenhaltungen:
- EP-A- 0 292 224
- EP-A- 0 324 168
- DE-A- 3 424 999

## Beschreibung

Die Erfindung betrifft eine Schlitzwandfräse gemäß dem Oberbegriff des Anspruchs 1. Eine derartige Schlitzwandfräse umfaßt einen Fräsrahmen, ein Lagerschild, das am Fräsrahmen angeordnet ist, mindestens ein Fräsrad, welches am Lagerschild drehbar gelagert ist, einen Antrieb, der vom Lagerschild beabstandet am Fräsrahmen angebracht ist, ein Getriebe, welches im Lagerschild angeordnet ist, und eine Antriebswelle, welche einerseits drehfest mit dem Antrieb und andererseits drehfest mit einem zur Antriebswelle im wesentlichen koaxial angeordneten Antriebsritzel des Getriebes im Lagerschild in Verbindung steht.

Eine Schlitzwandfräse mit diesen Merkmalen geht beispielsweise aus der DE-C-34 24 999 hervor. Durch die Verlagerung des Antriebs aus dem Lagerschild an eine von den Fräsrädern beabstandete Stelle am Fräsrahmen wird eine besonders kompakte Schlitzwandfräse geschaffen. Diese ist zur Fertigung auch schmaler Schlitzwände geeignet.

Beim Betrieb dieser Schlitzwandfräse ist die gesamte Antriebseinrichtung großen Beanspruchungen ausgesetzt, wobei verstärkt Verschleiß am Getriebe und der Lagerung der Antriebswelle zwischen dem Antrieb und dem Getriebe auftritt. Es sind daher in regelmäßigen Abständen Wartungen erforderlich.

Es ist beispielsweise aus der EP-A-0 292 224 bekannt, zum Zwecke einer winkeligen Beweglichkeit eine Zahnkupplung einzusetzen, bei der an einem Ende einer Welle eine Außenbogenverzahnung mit balligen Zähnen ausgebildet ist. Diese können in eine Innenverzahnung einer Verbindungshülse eingreifen.

Aus der EP-A-0 324 168 ist ein Walzwerkantrieb bekannt, bei dem zwischen Kammwalzen und Arbeitswalzen Gelenkspindeln angeordnet sind.

Der Erfindung liegt die **Aufgabe** zugrunde, eine Schlitzwandfräse mit den gattungsgemäßen Merkmalen zu schaffen, bei der der Wartungsaufwand besonders gering gehalten ist.

Die Aufgabe wird erfindungsgemäß durch eine Schlitzwandfräse mit den kennzeichnenden Merkmalen des Anspruchs 1 gelöst. Demnach ist vorgesehen, daß an einem Ende der Antriebswelle eine Außenbogenverzahnung ausgebildet ist, daß eine Verbindungshülse mit einer Innenverzahnung vorgesehen ist, in welche die Antriebswelle mit ihrer Außenbogenverzahnung eingreift und darin drehfest und um die Antriebswellenachse auslenkbar aufgenommen ist, und daß die Verbindungshülse mit dem Antrieb oder dem Antriebsritzel drehfest verbunden ist.

Durch die erfindungsgemäße Anordnung wird eine drehfeste Verbindung zur Antriebswelle geschaffen, bei der eine gewisse Auslenkung der Antriebswelle um ihre Längsachse möglich ist. Die Antriebswelle rollt dabei auf den balligen Kanten ihrer Außenbogenverzahnung in der Innenverzahnung der Verbindungshülse ab. Durch diese Bewegbarkeit der Antriebswelle werden zwischen den Fräsrädern und dem davon beabstandet angeordneten Antrieb Verwindungen, welche beim Betrieb der Schlitzwandfräse unvermeidbar sind, kompensiert. Fertigungsbedingte Koaxialitätsabweichungen der oberen und unteren Lagerung der Welle können ebenfalls kompensiert werden. Hierdurch werden Querkräfte an den Radiallagern, insbesondere des Antriebsritzels, sowie das Auftreten unerwünschter Kräfte in einer getriebeseitigen Steckverbindung weitgehend vermieden. Die erfindungsgemäße Schlitzwandfräse ist somit insgesamt verschleißärmer und damit wartungsfreundlicher.

Die erfindungsgemäße Anordnung einer Außenbogenverzahnung, die in eine Verbindungshülse eingreift, kann entweder zwischen der Antriebswelle und dem Antriebsritzel oder zwischen der Antriebswelle und dem Antrieb vorgesehen sein.

Eine bevorzugte Ausführungsform besteht aber darin, daß an beiden Enden der Antriebswelle eine Außenbogenverzahnung und eine Verbindungshülse vorgesehen sind, von denen eine mit dem Antriebsritzel und eine mit dem Antrieb drehfest verbunden ist. Durch diese doppelte bewegbare Lagerung der Antriebswelle an ihren beiden Enden wird eine besonders gute Kompensation von Stößen und Verwindungen möglich. Bei der erfindungsgemäßen Anordnung kann auch eine Kupplung an der Antriebsseite der Antriebswelle entfallen, welche bisher benötigt wurde, eine Lageüberbestimmung zwischen dem Antrieb und der Antriebswelle zu vermeiden. Der Wegfall der Kupplung mit ihrer relativ großen Masse und der unmittelbare Anschluß der Antriebswelle an dem Antriebsauslaß wirkt sich positiv auf das Trägheitsmoment der Antriebswelle aus.

Nach einer weiteren Ausführungsform der Erfindung ist vorgesehen, daß die Innenverzahnung entlang der gesamten Länge der Verbindungshülse ausgebildet ist, und daß ein Verbindungszapfen mit einer entsprechend ausgebildeten Außenverzahnung vorgesehen ist, der an der von der Antriebswelle abgewandten Seite in die Verbindungshülse hineinragt und mit dieser drehfest verbunden ist. Ein derartiger Verbindungszapfen kann als separates Teil hergestellt werden, welches einerseits an die Innenverzahnung der Verbindungshülse und andererseits an das Antriebsritzel oder eine Ausgangswelle des Antriebsmotors angepaßt werden kann.

Da insbesondere Motorantriebe Zukaufteile mit einer vorgegebenen Ausgangswelle darstellen, ist es vorteilhaft, daß ein Verbindungszapfen vorgesehen ist, der mit den Antrieb drehfest verbunden ist.

Gemäß einer anderen Ausführungsform ist es vorteilhaft, daß ein Verbindungszapfen vorgesehen ist, der mit dem Antriebsritzel drehfest verbunden ist. Insbesondere können Verbindungszapfen sowohl am Antriebsritzel als auch am Antrieb vorgesehen sein.

Eine bevorzugte Weiterbildung der Erfindung liegt darin, daß der mit dem Antriebsritzel verbundene Verbindungszapfen an seiner vom Antriebsritzel abgewandten Stirnseite eine vertiefte Auflagefläche aufweist, und daß an dem lagerschildseitigen Ende der Antriebswelle eine Kalotte ausgebildet ist, die auf der Auflagefläche des Verbindungszapfens aufliegt. In Betriebsposition der Schlitzwandfräse erstreckt sich die Antriebswelle im wesentlichen vertikal von den Fräsrädern weg nach oben. In dieser Position liegt die Antriebswelle mit ihrer stirnseitigen teilkugelförmigen Kalotte auf der Auflagefläche des Verbindungszapfens am Antriebsritzel auf, so daß hierdurch die gesamte Axialkraft aufgenommen wird. Einer zusätzlichen Axiallagerung bedarf es bei dieser Anordnung nicht.

Zur genauen Fixierung der Lage der Antriebswelle ist es erfindungsgemäß vorgesehen, daß der Verbindungszapfen eine Einrichtung zum axialen Fixieren der Lage des Verbindungszapfens an der Verbindungshülse aufweist.

Schließlich besteht eine bevorzugte Ausführungsform darin, daß zwischen dem Verbindungszapfen zum Antrieb und dem benachbarten Ende der Antriebswelle ein elastisches Element angeordnet ist. Das elastische Element dient zur Lagedefinierung der Antriebswelle. Die Elastizität des elastischen Elements erlaubt dabei weiter eine gewisse Auslenkbarkeit der Antriebswelle. Gleichzeitig dient das elastische Element zur Dämpfung von Stößen zwischen dem Antrieb und der Antriebswelle.

Die Erfindung wird weiter anhand eines Ausführungsbeispiels erläutert, welches schematisch in den Zeichnungen dargestellt ist.

In den Zeichnungen zeigen:
- Fig. 1: eine schematische Teilquerschnittsansicht durch eine Schlitzwandfräse gemäß dem Stand der Technik;
- Fig. 2: eine Teilquerschnittsansicht eines Bereichs mit Antriebswelle einer erfindungsgemäßen Schlitzwandfräse; und
- Fig. 3: eine vergrößerte Detailansicht des unteren Endes der Antriebswelle gemäß Figur 2.

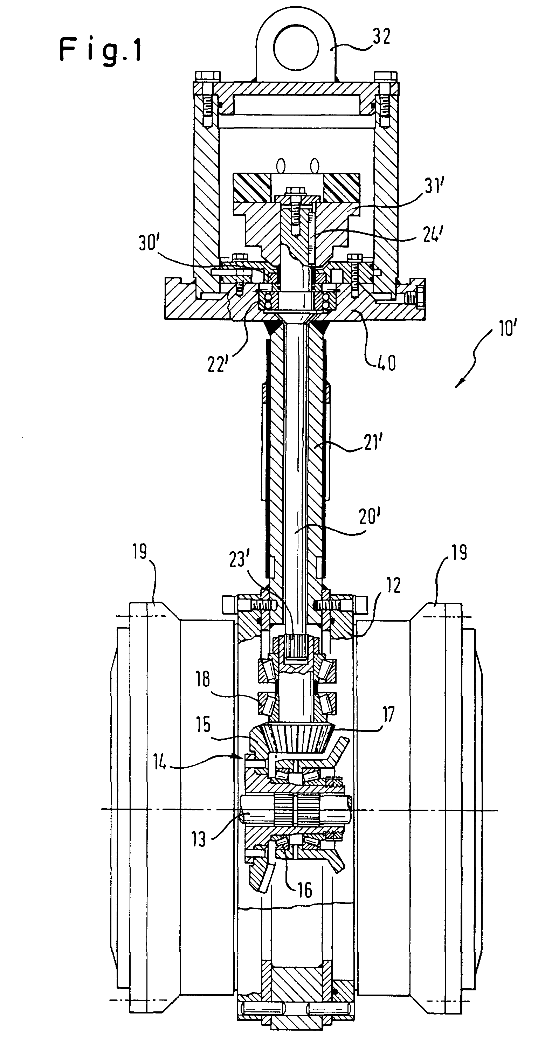

Der grundsätzliche Aufbau einer Schlitzwandfräse 10' ist in Figur 1 dargestellt. An einem Lagerschild 12 sind ein Paar von Fräsradnaben 19 angeordnet, welche über eine Fräsradwelle 13 angetrieben werden. An den Fräsradnaben 19 können die Fräsrader lösbar befestigt werden. Innerhalb des Lagerschildes 12, welches aus mehreren Platten zusammengesetzt ist, befindet sich ein Kegelradgetriebe 14. Die Antriebswelle 13 ist dabei mit einem Tellerrad 15 verbunden, welches über Tellerradlager 16 am Lagerschild 12 drehbar gehalten ist. Das Tellerrad 15 kämmt mit einem Antriebsritzel 17, dessen Rotationsachse sich im wesentlichen senkrecht zur Fräsradwelle 13 erstreckt. Über zwei Ritzellagern 18 ist das Antriebsritzel 17 wiederum im Lagerschild 12 drehbar gelagert.

Um das Lagerschild 12 möglichst kompakt zu halten, befindet sich der nicht dargestellte Antrieb oberhalb des Lagerschildes 12 am Fräsrahmen 40. Das Antriebsritzel 17 ist dabei über eine erste drehfeste Verbindung 23' mit einer Antriebswelle 20' verbunden, welche sich parallel und zentrisch zum Antriebsritzel 17 nach oben zum Antrieb erstreckt. Am oberen Ende der Antriebswelle 20', welche flüssigkeitsdicht von einem Rohr 21' umgeben ist, befindet sich eine zweite drehfeste Verbindung 24', welche in diesem Fall eine Feder-Nut-Verbindung ist. Diese dient zur Verbindung mit einem Kupplungselement 31', über welches das Drehmoment vom Antrieb an die Antriebswelle 20' übertragen wird. Am Fräsrahmen 40 ist die Antriebswelle 20' über ein Antriebswellenlager 22' drehbar gelagert, welche flüssigkeitsdicht in einem Lagergehäuse 30 angeordnet ist. Schließlich ist am Fräsrahmen 40 ein Halter 32 vorgesehen, über den die Schlitzwandfräse 10' in einer zu bearbeitenden Schlitzwand im Boden gehalten und geführt werden kann.

Diese bekannte Anordnung von Antrieb und Fräsrädern bei einer Schlitzwandfräse ist hinsichtlich einer möglichst schmalen Stegausbildung zwischen den Fräsrädern vorteilhaft. Da im Betrieb relativ große Kräfte auf die Schlitzwandfräse und insbesondere den Fräsrahmen 40 einwirken, kann es zu Verwindungen und Verformungen des Fräsradrahmens 40 kommen. Die hierdurch verursachten Lageveränderungen des Antriebs, der Antriebswelle 20' und des Antriebsritzels 17 gegeneinander führen jedoch zu relativ hohen Querkräften in den Ritzellagern 18 und dem Antriebswellenlager 22' sowie unerwünschten Zahnkräften im Kegelradgetriebe 14. Dies hat einen erhöhten Verschleiß der Lager und der Zahnräder zur Folge, was zu einem erhöhten Zeit- und Kostenaufwand für die Wartung der Schlitzwandfräse führt.

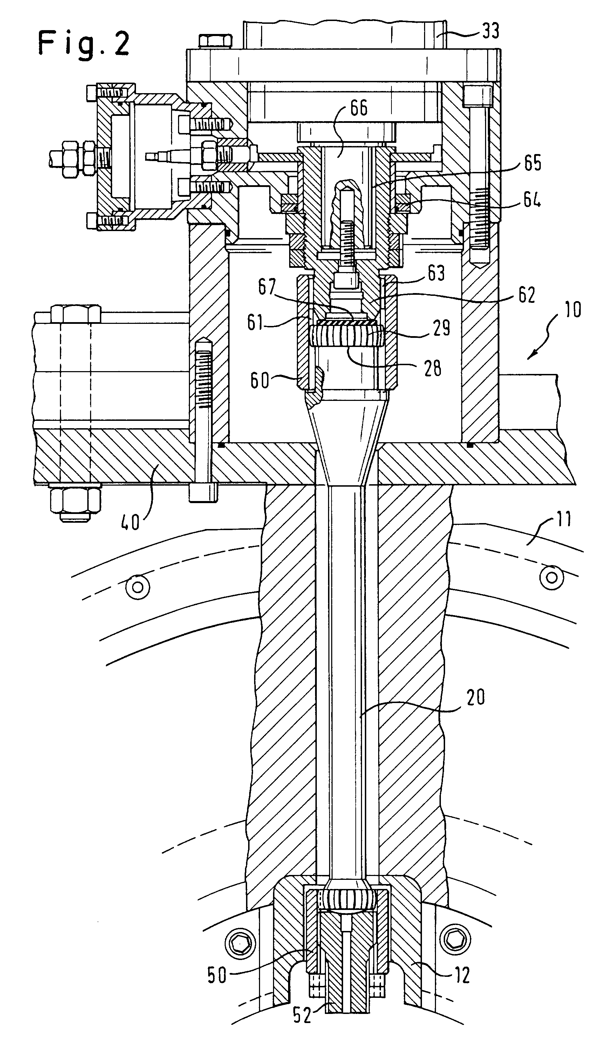

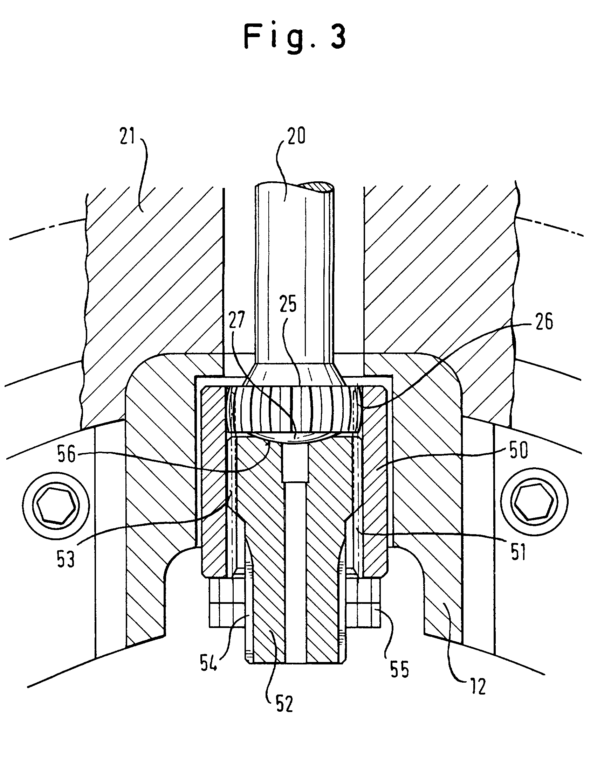

Diese Probleme werden bei einer erfindungsgemäßen Schlitzwandfräse 10 vermieden, welche in den Figuren 2 und 3 ausschnittsweise gezeigt ist. Die im Zusammenhang mit Figur 1 beschriebenen Bauteile, welche mit einem Bezugszeichen ohne Anführungsstrich benannt sind, können bei der erfindungsgemäßen Schlitzwandfräse 10 im wesentlichen ohne Veränderung vorgesehen werden.

Zur Kompensation von Verwindungen des Fräsrahmens 40 gegenüber den Fräsrädern 11 weist eine Antriebswelle 20 an ihrem unteren, dem Lagerschild 12 zugewandten Ende einen Absatz 25 mit einer Außenbogenverzahnung 26 auf. Die Außenbogenverzahnung 26 ist so ausgelegt, daß hierüber die Antriebswelle 20 in einer Innenverzahnung 51 einer ersten Verbindungshülse 50 um die Achse der Antriebswelle 20 auslenkbar ist. Bei der Außenbogenverzahnung 26 sind die Außenkanten der einzelnen Zähne oder Vorsprünge ballig und entsprechend einer geeigneten Abwälzkurve geformt. Der maximale Durchmesser des Außenprofils der Außenbogenverzahnung 26 entspricht dabei dem maximalen Innendurchmesser des Profils der Innenverzahnung 51.

Die mit achsparallelen Profilkanten ausgebildete Innenverzahnung 51 erstreckt sich entlang der gesamten Innenfläche der Verbindungshülse 50. An der von der Antriebswelle 20 abgewandten Seite der Verbindungshülse 50 ist ein erster Verbindungszapfen 52 mit einer Außenverzahnung 53 mit achsparallelen Profilkanten eingeschoben. Die sich gegenüberliegenden Enden der Antriebswelle 20 des ersten Verbindungszapfens 52 stehen miteinander in Kontakt. Um eine Auslenkbewegung der Antriebswelle 20 zu erleichtern, ist die Kontaktfläche der Antriebswelle 20 als eine Kugelkalotte 27 ausgebildet, welche auf einer als ein Negativ hierzu ausgebildeten, gehärteten Auflagefläche 56 aufliegt. Am von der Auflagefläche 56 abgewandten Ende des ersten Verbindungszapfens 52 ist in einem abgesetzten, durchmesserkleineren Bereich eine steckbare Verbindung 54 für das Antriebsritzel 17 vorgesehen. Die steckbare Verbindung 54 kann eine Kerbzahnverbindung oder ähnliches sein. Die axiale Lage der Verbindungshülse 50 auf dem ersten Verbindungszapfen 52 wird über eine ringförmige Sicherung 55 fixiert. Der erste Verbindungszapfen 52 ist an seinem von der Auflagefläche 56 abgewandten Ende weiter über eine übliche drehfeste Verbindung mit dem Antriebsritzel 17 gekoppelt.

Am oberen Ende der Antriebswelle 20 ist in ähnlicher Weise wie am unteren Ende ein zweiter Absatz 28 mit einer Außenbogenverzahnung 29 vorgesehen. Diese Außenbogenverzahnung 29 greift in eine entsprechend ausgebildete Innenverzahnung 61 einer zweiten Verbindungshülse 60 formschlüssig ein, um mit dieser eine drehfeste, um die Achse der Antriebswelle 20 schwenkbare Verbindung zu schaffen. Von der anderen Seite der zweiten Verbindungshülse 60 greift ein zweiter Verbindungszapfen 62 in die Innenverzahnung 61 ein, um ebenfalls eine drehfeste Verbindung zu bilden. Zwischen dem oberen Ende der Antriebswelle 20 und dem gegenüberliegenden Ende des zweiten Verbindungszapfens 62 ist ein elastisches Element 65, beispielsweise eine Gummiplatte, angeordnet, durch welche eine gewisse Axialkraft zur Positionierung der Antriebswelle 20 ausgeübt wird, ohne dabei die Auslenkbarkeit der Antriebswelle 20 zu beeinträchtigen.

Der zweite Verbindungszapfen 62 ist wiederum fest mit einer Motorwelle 66 des Antriebs 33 verbunden. Zwischen dem zweiten Verbindungszapfen 62 und einem Gehäuse am Fräsrahmen 40 ist eine Dichtung 64 angeordnet. Die Lagerung der oberen Verbindung wird durch die Lagerung der Motorwelle 66 im Antrieb 33 sichergestellt.

## Patentansprüche

1. Schlitzwandfräse mit
- einem Fräsrahmen (40),
- einem Lagerschild (12), das am Fräsrahmen (40) angeordnet ist,
- mindestens einem Fräsrad (22), welches am Lagerschild (12) drehbar gelagert ist,
- einem Antrieb (33), der vom Lagerschild (12) beabstandet am Fräsrahmen (40) angebracht ist,
- einem Getriebe (14), welches im Lagerschild (12) angeordnet ist, und
- einer Antriebswelle (20), welche einerseits drehfest mit dem Antrieb (33) und andererseits drehfest mit einem zur Antriebswelle (20) im wesentlichen koaxial angeordneten Antriebsritzel (17) des Getriebes (14) im Lagerschild (12) in Verbindung steht,
**dadurch gekennzeichnet,**
- **daß** an dem lagerschildseitigen Ende der Antriebswelle (20) eine Außenbogenverzahnung (26) ausgebildet ist,
- **daß** mit dem Antriebsritzel (17) eine Verbindungshülse (50) mit einer Innenverzahnung (51) drehfest verbunden ist, in welche die Antriebswelle (20) mit ihrer Außenbogenverzahnung (26) eingreift und darin drehfest und um die Achse der Antriebswelle (20) auslenkbar aufgenommen ist,
- **daß** eine lagerschildseitige Stirnseite der Antriebswelle (20) als eine Lagerfläche ausgebildet ist,
- **daß** auf seiten des Antriebritzels (17) eine Auflagefläche (56) angeordnet ist, welche der Lagerfläche axial gegenüberliegt,
- **daß** die Antriebswelle (20) mit der Lagerfläche auf der Auflagefläche (56) aufliegt und dabei eine Axiallagerung gebildet ist, welche die Axialkräfte der Antriebswelle (20) aufnimmt, und
- **daß** das obere, antriebsseitige Ende der Antriebswelle (20) über eine Verbindung zu einer Motorwelle (66) des Antriebs (33) radial gelagert ist.

2. Schlitzwandfräse nach Anspruch 1,
**dadurch gekennzeichnet,**
**daß** an beiden Enden der Antriebswelle (20) eine Außenbogenverzahnung (26, 29) und eine Verbindungshülse (50, 60) vorgesehen sind, von denen eine mit dem Antriebsritzel (17) und eine mit den Antrieb (33) drehfest verbunden ist.

3. Schlitzwandfräse nach einem der Ansprüche 1 und 2,
**dadurch gekennzeichnet,**
**daß** die Innenverzahnung (51, 61) entlang der gesamten Länge der Verbindungshülse (50, 60) ausgebildet ist, und
**daß** ein Verbindungszapfen (52, 62) mit einer entsprechend ausgebildeten Außenverzahnung (53, 63) vorgesehen ist, der an der von der Antriebswelle (20) abgewandten Seite in die Verbindungshülse (50, 60) hineinragt und mit dieser drehfest verbunden ist.

4. Schlitzwandfräse nach einem der Ansprüche 1 bis 3,
**dadurch gekennzeichnet,**
**daß** ein Verbindungszapfen (62) vorgesehen ist, der mit dem Antrieb (33) drehfest verbunden ist.

5. Schlitzwandfräse nach einem der Ansprüche 1 bis 4,
**dadurch gekennzeichnet,**
**daß** ein Verbindungszapfen (52) vorgesehen ist, der mit dem Antriebsritzel (17) drehfest verbunden ist.

6. Schlitzwandfräse nach einem der Ansprüche 3 bis 5,
**dadurch gekennzeichnet,**
**daß** die Lagerfläche an dem lagerschildseitigen Ende der Antriebswelle (20) als eine Kalotte (27) ausgebildet ist, die auf der Auflagefläche (56) des Verbindungszapfens (52) aufliegt, und
**daß** der mit dem Antriebsritzel (17) verbundene Verbindungszapfen (52) an seiner vom Antriebsritzel (17) abgewandten Stirnseite eine als Negativ zur Kalotte (27) ausgebildete Vertiefung als Auflagefläche (56) aufweist.

7. Schlitzwandfräse nach einem der Ansprüche 3 bis 6,
**dadurch gekennzeichnet,**
**daß** der Verbindungszapfen (52) eine Einrichtung zum axialen Fixieren der Lage des Verbindungszapfens (52) an der Verbindungshülse (50) aufweist.

8. Schlitzwandfräse nach einem der Ansprüche 1 bis 7,
**dadurch gekennzeichnet,**
**daß** zwischen dem antriebsseitigen Verbindungszapfen (62) und dem benachbarten Ende der Antriebswelle (20) ein elastisches Element (67) angeordnet ist.

## Claims

1. A trench wall cutter comprising:
- a cutting frame (40),
- a bearing shield (12) positioned on said cutting frame (40),
- at least one cutting wheel (22) which is pivotably mounted on said bearing shield (12),
- a drive means (33) which is attached to the cutting frame (40) remote from said bearing shield (12),
- a gear (14) which is located in the bearing shield (12), and
- a drive shaft (20) which is connected at a first end to the drive means (33) and at a second end to a drive pinion (17) of the gear (14) in the bearing shield (12), the pinion being positioned substantially coaxially with said drive shaft (20),
**characterized in that**
- the bearing shield-side end of the drive shaft (20) comprises an external spiral tooth system (26),
- the drive pinion (17) is connected in torsional stiff manner to a connection sleeve (50) having an internal tooth system (51) in which the drive shaft (20) with its external spiral tooth system (26) is received so that it is mounted in torsional stiff manner and can be deflected in relation to the axis of the drive shaft (20),
- a bearing shield-side face of the drive shaft (20) is formed as a bearing surface,
- the drive pinion (17) includes a support surface (56) which lies axially opposite the bearing surface,
- the drive shaft (20) with the bearing surface lies on the support surface (56) and thus an axial bearing is formed which receives the axial forces by the drive shaft (20), and
- the upper, drive-side end of the drive shaft (20) is radially supported by a connection to a motor shaft (66) of the drive means (33).

2. A trench wall cutter according to claim 1,
**characterized in that**
both ends of the drive shaft (20) include external spiral tooth systems (26, 29) and a connecting sleeve (50, 60), wherein one end is joined to the drive pinion (17) and one end is connected in torsional stiff manner to the drive means (33).

3. A trench wall cutter according to one of the claims 1 and 2,
**characterized in that**
the internal tooth system (51, 61) is formed along an entire length of the connecting sleeve (50, 60), and that a connecting journal (52, 62) having an external tooth system (53, 63) is provided which projects from the side facing away from the drive shaft (20) into the connecting sleeve (50, 60) and which is connected in torsional stiff manner to said sleeve.

4. A trench wall cutter according to one of the claims 1 to 3,
**characterized in that**
a connecting journal (62) is connected in torsional stiff manner to the drive means (33).

5. A trench wall cutter according to one of the claims 1 to 4,
**characterized in that**
a connecting journal (52) is connected in torsional stiff manner to the drive pinion (17).

6. A trench wall cutter according to one of the claims 3 to 5,
**characterized in that**
the bearing surface at the bearing shield-side end of the drive shaft (20) is formed as a spherical cap (27) which rests on the support surface (56) of the connecting journal (52), and the connecting journal (52) joined to the drive pinion (17) includes on the side facing away from the drive pinion (17) a support surface (56) which is formed as an indentation being able to receive the spherical cap (27).

7. A trench wall cutter according to one of the claims 3 to 6,
**characterized in that**
the connecting journal (52) has means for axially fixing the location of the connecting journal (52) on the connecting sleeve (50).

8. A trench wall cutter according to one of the claims 1 to 7,
**characterized in that**
an elastic element (67) is positioned between the connecting journal (62) on the side of the drive means and an adjacent end of the drive shaft (20).

## Revendications

1. Fraise pour parois moulées avec
- un châssis (40) de fraise,
- un flasque (12) qui est disposé sur le châssis (40) de fraise,
- au moins une roue de fraisage (11) qui est montée rotative sur le flasque (12),
- un entraînement (33) qui est placé sur le châssis (40) de fraise à distance du flasque (12),
- un mécanisme (14) qui est placé dans le flasque (12), et
- un arbre d'entraînement (20) qui est relié d'une part de manière solidaire en rotation à l'entraînement (33) et d'autre part de manière solidaire en rotation à un pignon d'entraînement (17) du mécanisme (14) disposé sensiblement de manière coaxiale à l'arbre d'entraînement (20) dans le flasque (12),
***caractérisée en ce que***
- une denture hypoïde extérieure (26) est formée à l'extrémité de l'arbre d'entraînement (20) située du côté du flasque,
- au pignon d'entraînement (17) est reliée de manière solidaire en rotation une douille de liaison (50) avec une denture intérieure (51), dans laquelle l'arbre d'entraînement (20) se met en prise avec sa denture hypoïde extérieure (26) et est logé de manière solidaire en rotation et de manière pivotante autour de l'axe de l'arbre d'entraînement (20),
- une face frontale de l'arbre d'entraînement (20) du côté du flasque est conformée en surface de portée,
- du côté du pignon d'entraînement (17) est prévue une surface d'appui (56) qui est opposée axialement à la surface de portée,
- l'arbre d'entraînement (20) s'appuie avec la surface de portée sur la surface d'appui (56) et il est ainsi formé un appui axial qui supporte les efforts axiaux de l'arbre d'entraînement (20), et
- l'extrémité supérieure de l'arbre d'entraînement (20) du côté de l'entraînement est soutenue radialement par l'intermédiaire d'une liaison avec un arbre moteur (66) de l'entraînement (33).

2. Fraise pour parois moulées selon la Revendication 1, ***caractérisée en ce que,*** aux deux extrémités de l'arbre d'entraînement (20), il est prévu une denture hypoïde extérieure (26, 29) et une douille de liaison (50, 60), dont l'une est reliée de manière solidaire en rotation au pignon d'entraînement (17) et l'autre à l'entraînement (33).

3. Fraise pour parois moulées selon l'une quelconque des Revendications 1 et 2, ***caractérisée***
***en ce que*** la denture intérieure (51, 61) est formée sur toute la longueur de la douille de liaison (50, 60) et
***en* ce *qu*'**un tenon de liaison (52, 62) avec une denture extérieure correspondante (53, 63) est prévu, qui forme saillie dans la douille de liaison (50, 60) du côté opposé à l'arbre d'entraînement (20) et est relié à celle-ci de manière solidaire en rotation.

4. Fraise pour parois moulées selon l'une quelconque des Revendications 1 à 3, ***caractérisée en ce qu***'il est prévu un tenon de liaison (62) qui est relié à l'entraînement (33) de manière solidaire en rotation.

5. Fraise pour parois moulées selon l'une quelconque des Revendications 1 à 4, ***caractérisée en ce qu***'il est prévu un tenon de liaison (52) qui est relié au pignon d'entraînement (17) de manière solidaire en rotation.

6. Fraise pour parois moulées selon l'une quelconque des Revendications 3 à 5, ***caractérisée***
***en ce que*** la surface de portée est formée à l'extrémité de l'arbre d'entraînement (20) du côté du flasque sous la forme d'une calotte (27) qui s'appuie sur la surface d'appui (56) du tenon de liaison, et
***en ce que*** le tenon de liaison (52) relié au pignon d'entraînement (17) présente, sur une face frontale opposée au pignon d'entraînement (17), un renfoncement conformé en négatif de la calotte (27) et servant de surface d'appui (56).

7. Fraise pour parois moulées selon l'une quelconque des Revendications 3 à 6, ***caractérisée en ce que*** le tenon de liaison (52) présente un dispositif de fixation axiale de la position du tenon de liaison (52) sur la douille de liaison (50).

8. Fraise pour parois moulées selon l'une quelconque des Revendications 1 à 7, ***caractérisée en ce qu***'entre le tenon de liaison (62) côté entraînement et l'extrémité voisine de l'arbre d'entraînement (20) est placé un élément élastique (67).
